**Europäisches Patentamt**

**European Patent Office**

**Office européen des brevets**

(19)

(11) Veröffentlichungsnummer : **0 022 581**
**B1**

(12) # EUROPÄISCHE PATENTSCHRIFT

(45) Veröffentlichungstag der Patentschrift :
16.02.83

(21) Anmeldenummer : **80104157.5**

(22) Anmeldetag : **16.07.80**

(51) Int. Cl.³ : **E 04 B   1/78, F 16 L 59/00,
C 04 B 43/02**

(54) **Wärmeisolierkörper.**

(30) Priorität : **16.07.79 DE 2928695**

(43) Veröffentlichungstag der Anmeldung :
**21.01.81 Patentblatt 81/03**

(45) Bekanntmachung des Hinweises auf die Patenterteilung : **16.02.83 Patentblatt 83/07**

(84) Benannte Vertragsstaaten :
**AT BE CH FR GB IT LI NL SE**

(56) Entgegenhaltungen :
**DE A 1 954 992**
**DE B 1 170 855**
**DE U 1 936 673**
**DE U 7 835 032**
**GB A 752 873**

(73) Patentinhaber : **Grünzweig + Hartmann und Glasfaser AG**
**Bürgermeister-Grünzweig-Strasse 1-47**
**D-6700 Ludwigshafen am Rhein (DE)**

(72) Erfinder : **Kummermehr, Hans**
**Prinzregentenstrasse 25a**
**D-6700 Ludwigshafen (DE)**
Erfinder : **Mohr, Günther**
**Herzogstrasse 19**
**D-6700 Ludwigshafen (DE)**

(74) Vertreter : **KUHNEN & WACKER Patentanwaltsbüro**
**Schneggstrasse 3-5 Postfach 1729**
**D-8050 Freising (DE)**

EP 0 022 581 B1

Jouve, 18, rue St-Denis, 75001 Paris, France

Wärmeisolierkörper

Die Erfindung betrifft einen Wärmeisolierkörper aus einem teilchenförmigen Isoliermaterial und einer Hülle aus einem Flachmaterial, der durch Füllen der Hülle mit dem Isoliermaterial und anschließendes Formen der mit dem Isoliermaterial gefüllten Hülle unter Verdichten des Isoliermaterials durch Anwendung von Überdruck auf die Außenseite der gefüllten Hülle hergestellt wird.

Aus der DE-C 19 54 992 sind Wärmedämmplatten bekannt, die einen Kern aus einem Gemisch feindisperser Stoffe, beispielsweise expandierte Kieselerde, Trübungsmittel und Mineralfasern, und eine äußere Hülle aus Glasseidengewebe oder dgl. aufweisen. Zu ihrer Herstellung wird in der Regel das Gemisch aus den feindispersen Stoffen in eine Hülle aus Glasseidengewebe od. dgl. eingefüllt. Anschließend wird diese Hülle zugenäht und durch einen Preßvorgang zu einer Platte gepreßt, deren Größe sich durch die Abmessung der Hülle bestimmt.

Gemäß DE-C 20 36 124 wird der Preßgang so geführt, daß eine möglichst innige Verzahnung der feindispersen Stoffe untereinander und mit der Oberfläche bzw. den Poren des relativ rauhen Sackmaterials erfolgt, so daß am Ende des Preßvorgangs regelmäßig ein Sandwich vorliegt. Dieser Sandwich besteht aus dem Kern aus feindispersen Stoffen und der Hülle. Sofern die Oberfläche der Hülle sehr rauh oder porös ist, läßt es sich jedoch besondere Maßnahmen nicht vermeiden oder wird gemäß DE-C 20 36 124 bezweckt, daß das Kernmaterial mindestens teilweise in diese Poren eindringt und den Kern damit an der Oberfläche der Hülle verankert. Derartige Platten besitzen eine relativ große Biegesteifigkeit und gehen bei Biegebeanspruchung praktisch ohne nennenswerte Verformung zu Bruch. Diese Isolierplatten sind also nicht in der Lage, sich den Unebenheiten des zu isolierenden Gegenstandes anzupassen, d. h. es ist nicht ohne weiteres möglich, derartige Platten auf einoder zweidimensional gekrümmte Flächen aufzubringen.

Ein weiterer Nachteil besteht darin, daß der Preßvorgang zur Herstellung derartiger Isolierplatten mit relativ langsamer Geschwindigkeit ablaufen muß. Bei relativ schnell geführtem Preßvorgang weisen die Kerne derart hergestellter Isolierplatten eine schieferartige, inhomogene Struktur auf, so daß sich die Wärmeleitzahl dieser Platten infolge der entstandenen Inhomogenitäten gegenüber einer homogen gepreßten Platte verschlechtert. Zusätzlich neigen die in einem derartigen Verfahren hergestellten Isolierplatten dazu, nach dem Pressen infolge der schieferartigen Struktur verhältnismäßig stark zurückzufedern, so daß die Dickenunterschiede von Platte zu Platte verhältnismäßig groß sind.

Der Erfindung liegt die Aufgabe zugrunde, einen Wärmeisolierkörper zu schaffen, der trotz eines relativ schnell erfolgenden Preßvorgangs einen homogenen Aufbau, also keine schieferartige Struktur eingeht, mit der Hülle keine Verbindung, also auch keine Sandwichstruktur aufweist und eine relativ hohe Biegeverformbarkeit besitzt.

Die Aufgabe wird gemäß dem Merkmal des kennzeichnenden Teils des Anspruchs 1 gelöst.

Wenn man zwischen Umhüllungsmaterial und dem Isoliermaterial ein Trennmittel vorsieht und dadurch ein Festhaften des Isoliermaterials an der Hülle während des Preßvorgangs sicher verhindert, so wird überraschenderweise erreicht, daß der dadurch hergestellte Körper neben der Trennung von Hülle und Kern keine schieferartige Kernstruktur besitzt und ausgezeichnete Biegeeigenschaften aufweist.

Unterwirft man den erfindungsgemäß hergestellten Körper, der üblicherweise in Form einer Platte vorliegt, einer Biegebehandlung, so läßt sich dieser Körper etwa fünfzehnmal besser biegen als die gemäß DE-C 20 36 124 hergestellte Platte, bevor es zum Bruch kommt.

Aufgrund der erfindungsgemäß erzeugten Struktur des Wärmeisolierkörpers ist es möglich, eine derartige Platte um einen runden Körper mit einem Verhältnis $R/D = 15$ zu biegen und auch wiederum zurückzubiegen, ohne daß der Kern nach einem derartigen Biegevorgang Risse oder sonstige Auflösungserscheinungen aufweist. Dabei ist R der Radius des von der Platte umhüllten Kreiskörpers und D die Plattenstärke bzw. die Stärke des Körpers. Entsprechend dieser Biegebzw. Verformbarkeit läßt sich der erfindungsgemäß hergestellte Körper auch als umhüllter plastisch verformbarer Körper bezeichnen.

Diese außergewöhnlich gute Biegefähigkeit und die Homogenität des Kernteils kann darauf zurückgeführt werden, daß das zwischen der Hülle und dem Kernmaterial angeordnete Trennmittel eine völlig freie Bewegungsmöglichkeit des Kern-Isoliermaterials während des Preßvorgangs zuläßt. Durch das Trennmittel werden insbesondere das Eindringen des Isoliermaterials in die Fasern bzw. die zwischen den Fasern gebildeten Hohlräume der Hülle und ein Festhaften der Isoliermaterialgrenzschicht mit dieser Hülle verhindert. Während des Preßvorgangs wird die zwischen der Isoliermaterialgrenzfläche und der Hülle erzeugte Reibung durch das Trennmittel nahezu aufgehoben, so daß sich keinerlei Schubspannungen innerhalb des Kernmaterials aufbauen können. Das Kernmaterial kann also während des Preßvorgangs frei innerhalb der Hülle zu einem homogenen Kern aufgebaut werden, der keinerlei schieferartige Struktur und keinerlei durch die Schubspannungen erzeugte Inhomogenitäten aufweist.

Die Hülle kann aus verschiedenen Werkstoffen hergestellt sein, z. B. aus Glasfasern, Quarzfasern, Kunststoffasern, natürlichen Fasern, wie Baumwolle oder Seide, sowie aus Flachmaterialien, wie Papier oder perforierte Kunststoffolie, oder Geweben bzw. Stoffen, wobei die Durchlässigkeit entsprechend aufrechterhalten wird. Derartige Materialien werden gemäß dem eingesetzten Druck, der Betriebstemperatur und der gewünschten Flexibilität gewählt.

Als teilchenförmiges Isoliermaterial können Pulver- oder Faserteilchen und/oder deren Gemische eingesetzt werden, wobei zu erwähnen ist, daß der eingesetzte Grundstoff selbst kein guter Wärmeisolator sein muß. Vorteilhaft können Aluminiumsilikatfasern, Quarz- oder Glasfasern sowie weitere keramische Fasern, pulverförmiges Aluminium oder Gemische aus Flugasche mit expandierter Kieselerde, feinteiliges Aluminium- oder Chromoxid und Silica-Aerogel, das gegebenenfalls ein Trübungsmittel, wie Titandioxid (Ilmenit) enthält, eingesetzt werden. Die Größe dieser Teilchen kann in einem weiten Bereich variieren ; sie liegt jedoch im allgemeinen in einem Bereich von 10 Å bis 2 mm.

Als Trennmittel können Materialien eingesetzt werden, die die Adhäsionskräfte bzw. die Reibung zwischen zwei aneinander-grenzenden Oberflächen derart verringern, daß ein Verhaften verhindert wird. Sie sollen gegenüber den zu verarbeitenden Materialien chemisch indifferent sein, in diesen nur gering löslich sein und insgesamt eine geringe Flüchtigkeit aufweisen. Üblicherweise werden derartige Trennmittel in Form von Dispersionen (Emulsionen oder Suspensionen), Pasten oder Pulvern angewandt. Die Trennmittel können durch Aufpudern, Aufsprühen, Streichen oder Tauchen aufgebracht werden.

Als Trennmittel können organische oder anorganische Substanzen und/oder deren Gemische in Frage kommen.

Spezielle Beispiele für Trennmittel auf organischer Basis sind Silicone, die entweder fest (in Form des Pulvers) oder in Form von Gemischen mit Wasser, Öl, Fetten und dgl. eingesetzt werden ; Paraffinkohlenwasserstoffe, wie Wachse, Hartwachse, Paraffinwachs, Bienenwachs, Candeliawachs, wobei die Paraffinkohlenwasserstoffe natürlicher und synthetischer Natur sein können und gegebenenfalls mit funktionellen Gruppen substituiert sind ; Fettsäuren, wie Stearinsäure oder Palmitinsäure, sowie deren Metallsalze, beispielsweise die Kalzium-, Blei-, Magnesium-, Aluminium- oder die Zinksalze ; Fette tierischen und pflanzlichen Ursprungs, wie Talg, Wollfett, Palmfett ; Polymerisate, beispielsweise Polyvinylalkohol, Polyamid und Polyäthylen, Polymerisate der Fluorkohlenwasserstoffe, wie Polytetrafluoräthylen ; Mineralöle, wie Fettöle, synthetische Öle sowie deren Gemische mit Fettsäuren und/oder chemisch wirkenden Stoffen, wie Seifen.

Spezielle Beispiele für anorganische Gleitmittel sind pulverförmiges Talkum, Glimmer, hydrophorbierte pyrogene Kieselsäure, Ruß, Graphit, Schlämmkreide, Kalk, Ton, Molybdänsulfid und Zinksulfid. Sie können ebenfalls in Suspensionen in Wasser oder Mineralöl eingesetzt werden.

Bei der Wahl des Lösungsmittels ist jedoch darauf zu achten, daß die Struktur des hergestellten Kerns nicht nachteilig beeinflußt wird.

Bevorzugt wird hydrophobierte pyrogene Kieselsäure in Pulverform eingesetzt, insbesondere dann, wenn der Kern aus einer Mischung von pyrogener Kieselsäure, Trübungsmittel und Fasern besteht.

Um einen ausreichenden Trenneffekt zu erzielen, werden im allgemeinen 0,1-10 g Trennmittel auf die Innenoberfläche der Umhüllung in pulverförmiger Form aufgetragen.

Die Erfindung wird im folgenden anhand der Zeichnung und der Ausführungsbeispiele näher erläutert.

Figur 1 zeigt im Querschnitt einen Wärmeisolierkörper in Form einer Platte.

Figur 2 erläutert anhand eines Diagramms die Biegefähigkeit.

Figur 3 stellt die Verwendung des Isolierkörpers bei der Isolierung eines Kessels dar.

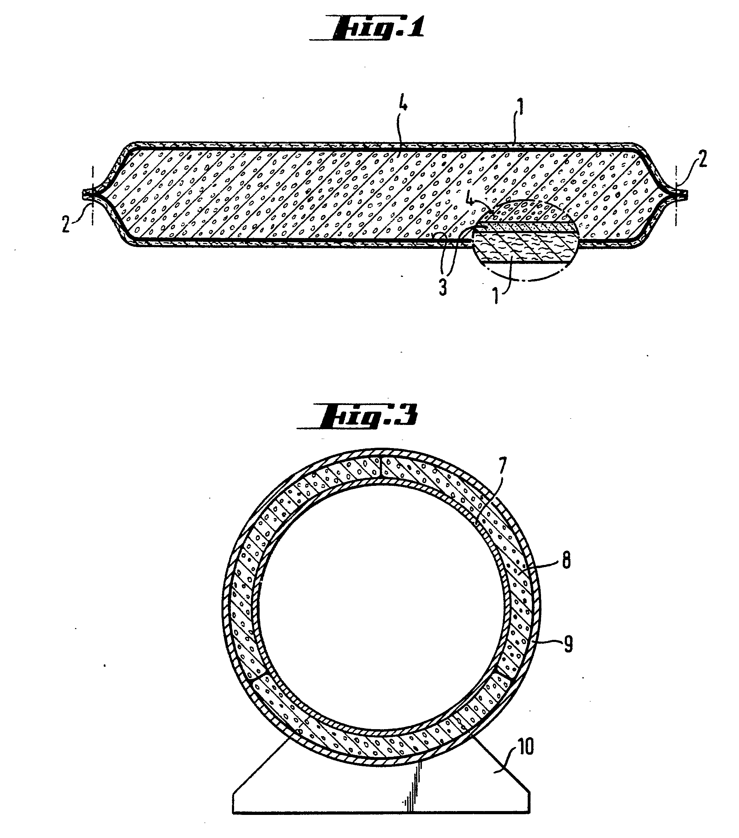

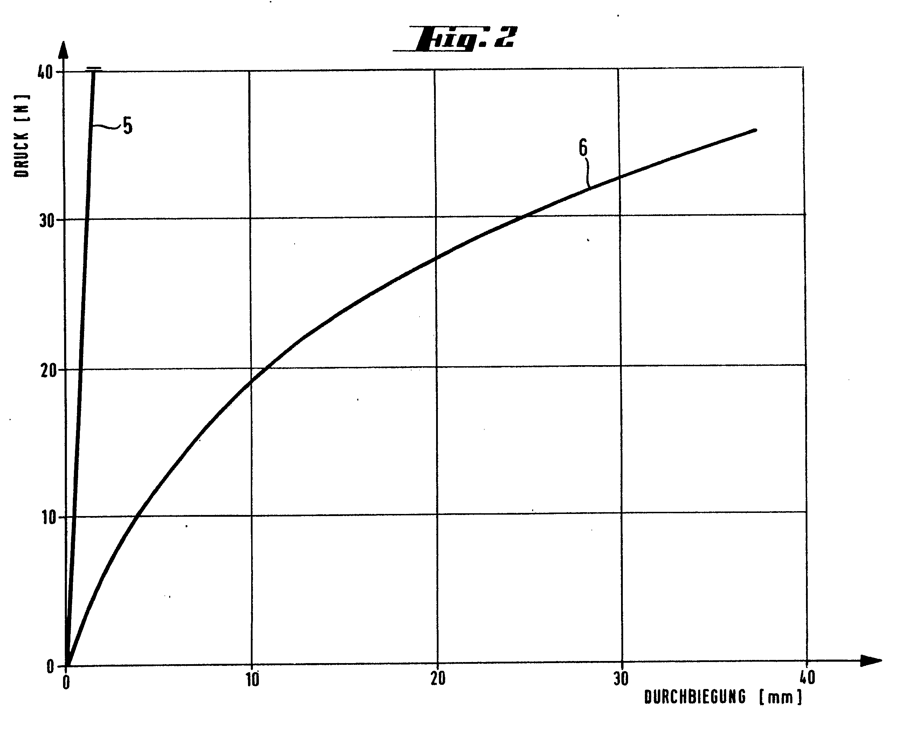

Der in Fig. 1 dargestellte Körper weist eine Hülle 1 auf, die an ihren Seitenkanten durch Nähte 2 abgegrenzt ist. Vor dem Zunähen wird auf die Innenoberflächen der Hülle 1, für die üblicherweise ein Glasgewebe verwendet wird, eine Schicht 3 eines Trennmittels aufgebracht. Setzt man als Kernmischung pyrogene Kieselsäure, ein Trübungsmittel und Glasfaserbestandteile ein, so wird das Glasseidengewebe mit 0,2 g hydrophobierter, pyrogener Kieselsäure je m² Gewebefläche bepudert. Anschließend wird die Hülle 1 entlang dreier Kanten zugenäht. In den entstandenen Umhüllungssack wird das zu verdichtende Material 4 eingefüllt. Danach wird die letzte Kante der Hülle 1 zugenäht. Das Teilchenförmige Material 4 in der Hülle 1 wird einer mechanischen Druckbelastung ausgesetzt, wobei der ausgeübte Druck in weiten Grenzen variieren kann. Üblicherweise liegt er jedoch zwischen 0,07 und 21 kg/cm² oder auch darüber, wobei die Festigkeit des Gewebes zu beachten ist.

Eine nach einer derartigen Behandlung, unter Zusatz von Trennmittel hergestellte Platte besitzt einen Kern, der vollständig vom Umhüllungsmaterial getrennt ist, da beide Teile unabhängig voneinander sich unter dem Preßdruck verformen können. Der Kern der Platte selbst weist unabhängig von der Preßgeschwindigkeit eine homogene Struktur auf, der frei von schiefrigen Inhomogenitäten ist.

In einem Vergleichsversuch wurden zwei Platten einer Biegefestigkeitsprüfung unterzogen, wobei die eine Platte nach dem Verfahren des Standes der Technik und die andere Platte nach dem erfindungsgemäßen Verfahren hergestellt wurde.

Die Proben hatten jeweils eine Abmessung von 680 × 440 mm und wurden auf zwei Auflager mit einer Stützweite von 600 mm aufgelegt. Anschließend wurde mittig ein Stempel unter kontinuierlicher stoßfreier Belastung der Probe angesetzt. Die Durchbiegung nahm dabei pro Minute jeweils kontinuierlich um ein Zehntel der Plattendicke zu. Gleichzeitig wurde ein Diagramm aufgenommen, das in Abbildung 2 vereinfacht dargestellt ist, wobei die Durchbiegung gegen den ausgeübten Druck aufgezeichnet ist. Aus einem derartigen Diagramm lassen sich dann das Durchbiegeverhalten und die maximale Bruchlast in Abhängigkeit vom Querschnitt ermitteln.

Aus dem Diagramm gemäß Abbildung 2 ist ersichtlich, daß die ohne Trennmittel hergestellte Probe (Kurve 5) bereits nach einer Durchbiegung von 2 mm bei einer Belastung von 40 N brach, während die erfindungsgemäß mit Trennmittel hergestellte Probe (Kurve 6) auch nach einer Durchbiegung von 37 mm einem angewandten Druck von 35 N nicht durchbrach. Während also die nach dem bekannten Verfahren hergestellte Platte bei Belastung nahezu sofort bricht, kann die erfindungsgemäß hergestellte Platte in einem weiten Belastungsbereich ohne Bruch belastet werden.

Ähnliche Ergebnisse können erhalten werden, wenn man anstelle von hydrophobierter, pyrogener Kieselsäure 5-10 g Talkum oder 1-2 g Magnesiumstearat je Quadratmeter Gewebefläche einsetzt. Ebenfalls zufriedenstellende Ergebnisse können durch Besprühen der Gewebeoberfläche mit einem Polytetrafluoräthylen-Spray erhalten werden.

In Fig. 3 ist der Kessel eines Kesselwagens im Querschnitt abgebildet. Dieser Kessel ist mit dem erfindungsgemäßen Wärmeisolierkörper isoliert. Der Kessel 7 ist mit mehreren Isolierplatten 8 umhüllt, die sich ohne Schwierigkeiten der Rundung des Kessels anpassen. Diese aus den Platten 8 bestehende Isolierschicht wird vom Mantel und den Ringspanten, die insgesamt mit 9 bezeichnet sind umhüllt und festgehalten. Die erfindungsgemäßen Wärmeisolierplatten befinden sich ebenfalls an dem abgerundeten Kopfstück des Kessels, an dessen Rundung sie sich ebenfalls ohne Bruch anpassen. Der Kessel selbst ruht auf dem Untergestell 10.

## Ansprüche

1. Wärmeisolierkörper aus einem teilchenförmigen Isoliermaterial (4) und einer Hülle (1) aus einem Flachmaterial, der durch Füllen der Hülle mit dem Isoliermaterial und anschließendes Formen der mit dem Isoliermaterial gefüllten Hülle unter Verdichten des Isoliermaterials durch Anwendung von Überdruck auf die Außenseite der gefüllten Hülle hergestellt wird, dadurch gekennzeichnet, daß ein Trennmittel (3) zwischen der Hülle und dem Isoliermaterial vorgesehen ist, das ein Festhaften des Isoliermaterials an der Hülle verhindert.

2. Körper nach Anspruch 1, dadurch gekennzeichnet, daß als Trennmittel organische und/oder anorganische Substanzen eingesetzt werden.

3. Körper nach Anspruch 2, dadurch gekennzeichnet, daß als organische Trennmittel Silicone, Fette, Harze, Paraffinkohlenwasserstoffe, die gegebenenfalls durch funktionelle Gruppen modifiziert sind, Fettsäuren, Metallsalze von Fettsäuren, Polymerisate aus Fluorkohlenwasserstoffen, Mineralöl sowie deren Gemische eingesetzt werden.

4. Körper nach Anspruch 2, dadurch gekennzeichnet, daß als anorganische Trennmittel pulverförmiges Talkum, Glimmer, Schlämmkreide, Kalk, Ton, Hydrophobierte pyrogene Kieselsäure, Ruß, Graphit, Molybdänsulfid, Zinksulfit, gegebenenfalls als Suspension in Wasser oder Mineralöl, und deren Gemische eingesetzt werden.

5. Körper nach einem oder mehreren der vorhergehenden Ansprüche 1 bis 4, dadurch gekennzeichnet, daß das Trennmittel auf die Innenoberflächen der Hülle aufgetragen wird.

6. Körper nach einem oder mehreren der vorhergehenden Ansprüche 1 bis 5, dadurch gekennzeichnet, daß das Trennmittel in einer Menge von 0,1-10 g/m$^2$ Plattenoberfläche pulverförmig aufgetragen wird.

7. Körper nach einem oder mehreren der vorhergehenden Ansprüche 1 bis 6, dadurch gekennzeichnet, daß 0,2 g/m$^2$ hydrophobierte pyrogene Kieselsäure auf die Innenoberflächen eines Glasseidengewebes pulverförmig aufgetragen wird.

## Claims

1. Heat insulating body of a particulate insulating material (4) and an envelope (1) of a sheet material, which is made by filling the envelope with the insulating material and lastly shaping the envelope filled with insulating material while compacting the insulating material by means of a pressure on the outside of the filled shell, characterised in that separator means (3) are provided between the envelope and the insulating material, which prevents the insulating material sticking to the envelope.

2. Body according to claim 1, characterised in that organic and/or inorganic substances are used as the separator means.

3. Body according to claim 2, characterised in that silicones, greases, resins, paraffin hydrocarbons, which may be also modified by functional groups, fatty acids, metal salts of fatty acids, polymerisates of fluorohydrocarbons, mineral oils and mixtures thereof are used as organic separator means.

4. Body according to claim 2, characterised in that talcum powder, mica, whiting, chalk kaolin, hydrophobic pyrogenic silicic acid, lamp-block, graphite, molybdenum sulphide, zinc sulphate, whether as suspension in water or mineral oil, and mixtures thereof are used as inorganic separator means.

5. Body according to one or more of the preceding claims 1 to 4, characterised in that the separator means are applied to the inner surface of the envelope.

6. Body according to one or more of the preceding claims 1 to 5, characterised in that the separator means are applied in powder form in an amount of from 0.1 to 10 g/m² of surface.

7. Body according to one or more of the preceding claims 1 to 6, characterised in that 0.2 g/m² hydrophobic pyrogenic silicic acid is applied in powder form to the inner surface of a woven glass fibre fabric.

## Revendications

1. Corps isolant thermique fait d'une matière isolante particulaire (4) et d'une enveloppe (1) en matière plate, qui est fabriqué par remplissage de l'enveloppe avec la matière isolante et mise en forme consécutive de l'enveloppe remplie de la matière isolante sous compression de la matière isolante, par application d'une surpression sur la surface externe de l'enveloppe remplie, caractérisé en ce qu'il est prévu, entre l'enveloppe et la matière isolante, un agent de séparation (3) qui empêche l'adhérence de la matière isolante sur l'enveloppe.

2. Corps suivant la revendication 2, caractérisé en ce qu'on utilise comme agent de séparation des substances organiques et/ou inorganiques.

3. Corps suivant la revendication 2, caractérisé en ce qu'on utilise comme agent de séparation organique des silicones, graisses, résines, hydrocarbures paraffiniques qui sont éventuellement modifiés par des groupes fonctionnels, des acides gras, des sels métalliques d'acides gras, des polymérisats de fluorocarbures, de l'huile minérale ou des mélanges de ces substances.

4. Corps suivant la revendication 2, caractérisé en ce qu'on utilise comme agent de séparation inorganique du talc pulvérulent, du mica, de la craie lévigée, de la chaux, de l'argile, de l'acide silicique pyrogéné rendu hydrophobe, de la suie, du graphite, du sulfure de molybdène, du sulfite de zinc, éventuellement en suspension dans l'eau ou dans une huile minérale, et des mélanges de ces substances.

5. Corps suivant l'une ou plusieurs des revendications 1 à 4 précédentes, caractérisé en ce que l'agent de séparation est déposé sur les surfaces internes de l'enveloppe.

6. Corps suivant une ou plusieurs des revendications 1 à 5 précédentes, caractérisé en ce que l'agent de séparation est déposé en poudre en une quantité de 0,1-10 g/m² de la surface du panneau.

7. Corps suivant une ou plusieurs des revendications 1 à 6 précédentes, caractérisé en ce qu'on dépose en poudre 0,2 g/m² d'acide silicique pyrogéné rendu hydrophobe sur les surfaces internes d'un tissu de soie de verre.

**Fig.1**

**Fig.3**

# Fig. 2